# EUROPÄISCHE PATENTSCHRIFT

(11) **EP 2 012 957 B1**
(45) Veröffentlichungstag und Bekanntmachung des Hinweises auf die Patenterteilung: **06.01.2010**
(21) Anmeldenummer: 07727405.8
(22) Anmeldetag: 27.03.2007
(51) Int. Cl.: B23C 3/18, B23P 15/00, G05B 19/418

(54) **ZERSPANVERFAHREN**
CUTTING METHOD
PROCEDE D'ENLEVEMENT DE COPEAUX

(30) Priorität: 12.04.2006 EP 06405165
(43) Veröffentlichungstag der Anmeldung: 14.01.2009
(73) Patentinhaber: Sulzer Markets and Technology AG, 8401 Winterthur (CH)
(72) Erfinder: FREI, Siegfried, 8535 Herdern (CH); JAHNEN, Werner, 8474 Welsikon (CH)
(86) Internationale Anmeldenummer: PCT/EP2007/052932
(87) Internationale Veröffentlichungsnummer: WO 2007/118771

(56) Entgegenhaltungen:
- EP-A- 1 217 483
- EP-A- 1 285 714
- EP-A- 1 396 309
- US-A1- 5 438 755

## Beschreibung

Die Erfindung betrifft ein Zerspanverfahren zur Bearbeitung eines Werkstücks mittels einer Zerspanvorrichtung, ein Computerprogrammprodukt für eine Datenverarbeitungsanlage zum Betreiben einer Zerspanvorrichtung nach dem erfindungsgemässen Zerspanverfahren, sowie eine Zerspanvorrichtung mit einem Computerprogrammprodukt zur Durchführung des Zerspanverfahrens gemäss dem Oberbegriff des unabhängigen Anspruchs der jeweiligen Kategorie und wie z.B. aus EP-A-1396309 bekannt ist.
Es ist bekannt, rotierende Laufräder, Pumpenräder, Impeller, sowie feststehende Leiträder für Pumpen, Verdichter oder Turbinen aus massivem Material durch spanabhebende Bearbeitung herauszuarbeiten. Diese Verfahren sind besonders dann gut anwendbar, wenn die zu bearbeitenden Geometrien nicht zu kompliziert sind, so dass mit dem spanabhebenden Werkzeug alle zu spanenden Bereiche im Rohling bequem erreicht werden können und / oder wenn die zu bearbeitenden Materialien mechanisch verhältnismässig weich bzw. leicht zu fräsen oder abzuspanen sind.

Bei geometrisch einfach aufgebauten Laufrädern und Leiträdern, die zu dem keinen all zu hohen Belastungen im Betriebszustand ausgesetzt sind, können die Laufräder auch aus Einzelteilen zusammengesetzt, oder aus einem Stück gefertigt werden. Das trifft insbesondere auf einfach aufgebaute Leiträder zu, die nicht zu grossen mechanischen Belastungen ausgesetzt sind, weil sie selbst nicht bewegt werden und somit auch keine Unwuchten oder Zentrifugalkräfte auftreten. Aber auch verhältnismässig langsam laufende Laufräder können mit verhältnismässig geringem Aufwand aus Einzelteilen zusammengesetzt werden, wobei zum Beispiel geeignete Passungen an den Bauteilen vorgesehen werden können, die dann mittels Schweissen dauerhaft verbunden werden. Diese Schweissungen dienen meist nur der Lagefixierung und sind für die Übertragung grösserer Kräfte und Belastungen nicht geeignet.

Besonders problematisch ist in diesem Zusammenhang die Befestigung von Deckscheiben oder Nabenscheiden an den Schaufeln von Impellern. Diese Problematik soll im folgenden beispielhaft anhand von Radial- und Axialverdichtern kurz erörtert werden, wobei die prinzipielle Problematik auch bei anderen Vorrichtungen relevant sein kann.

Der Radialverdichter beispielsweise besteht wie die Kreiselpumpe im wesentlichen aus einem rotierenden Laufrad, auch Schaufelrad genannt, das auf einer Achse montiert ist und sowohl offen, als auch mit einem Deckel versehen sein kann, wobei das Laufrad im Speziellen in einem umschliessenden feststehenden Leitrad angeordnet sein kann oder von einem spiralförmigen Sammelraum umschlossen sein kann. Das Leitrad hat dabei die Form eines Diffusors, in dem ein Teil der im Rotor erzeugten kinetischen Energie in Druckenergie umgewandelt wird. Das Leitrad besteht in dieser Ausführungsform im wesentlichen aus einer Oberscheibe und einer Unterscheibe, auch als Deckel bzw. Boden bezeichnet, zwischen denen sich Leitschaufeln befinden können.

Der Axialverdichter, umfassend einen Rotor und einen Stator, besteht in bekannter Weise aus einem als Laufrad ausgestalteten Rotor mit Antriebswelle und Leitschaufeln, wobei die Laufräder mit oder ohne Aussenring, also mit oder ohne Deckteil ausgestaltet sein können. Der Stator ist als umfassendes Gehäuse ausgebildet, in dem die feststehenden Leiträder untergebracht sind, wobei nicht in jedem Fall, wie zum Beispiel bei bestimmten Ventilatoren, ein Stator vorgesehen sein muss.

Es sei an dieser Stelle ausdrücklich klar gestellt, dass im Rahmen dieser Anmeldung unter dem Begriff "Leitschaufel" sowohl die gängige Bezeichnung für die Schaufeln eines Laufrades, als auch die Schaufeln eines Leitrades zu verstehen sind.

Die Laufräder sind dabei im Betriebszustand hoch belastet, da sie zum Teil mit enormen Rotationsgeschwindigkeiten von beispielsweise bis zu 15.000 U/min bei einem Durchmesser des Laufrades von z.B. 400mm beträchtlichen Zentrifugalkräften ausgesetzt sind. Dabei sind typischerweise Umfangsgeschwindigkeiten am Aussendurchmesser von bis zu 400 m/s und mehr durchaus erreichbar.

Es ist daher bekannt, die Laufräder aus massivem Material, je nach Anwendung z.B. aus hochfesten Edelstählen, Superlegierungen oder anderen geeigneten Metallen oder Metallegierungen zu fertigen und die Leitschaufeln durch spanabhebende Bearbeitung, z.B. durch Fräsen, aus diesem Material herauszuarbeiten.

Wenn die Laufräder, wie im Falle eines Impellers, zusätzlich mit einem Deckteil in Form eines Deckels ausgestattet werden müssen, ist es häufig aus rein geometrischen Gründen nicht mehr möglich, das Laufrad insgesamt in einem Stück aus massivem Material zu fräsen, sondern entweder wird ein einteiliger Grundkörper, der auf der Antriebesachse des Verdichters sitzt, mit Leitschaufeln herausgearbeitet, so dass ein Deckteil nachträglich auf die Leitschaufeln aufgesetzt und mit diesen zuverlässig verbunden werden muss. Oder in speziellen Fällen kann es auch möglich sein, dass ein Deckteil mit Leitschaufeln in einem Stück aus massivem Material gearbeitet wird, und der Grundkörper, der mit der Antriebsachse gekoppelt ist, mit dem Deckteil mit Leitschaufeln nachträglich zu einem kompletten Impeller zusammengesetzt und verbunden werden muss.

Grundkörper, Deckteile und Leitschaufeln müssen dann mit bestimmten Schweisstechniken miteinander verschweisst werden, was aufwendig ist und z.B. insbesondere bei hohen Belastungen zu nicht befriedigenden Ergebnissen, z.B. in Bezug auf Festigkeit, Laufruhe usw. führt und letztlich relativ teuer ist.

Prinzipiell versprechen in dieser Hinsicht aus einem Stück massiven Material durch Fräsen oder Zerspanen gefertigte Bauteile, wie Impeller, Laufräder usw. bessere Ergebnisse. Allerdings ist das bisher unter bestimmten Umständen nicht möglich.

Ein wesentlicher Gewichtspunkt beim Fräsen, der unbedingt zu beachten ist, ist, wie bereits erwähnt, einmal die zu fräsende Geometrie und zum anderen die Eigenschaften des zu bearbeitenden Materials, aus dem das Bauteil bestehen soll.

Einerseits gibt es Bauteile, die so gestaltet sind, dass diese aus rein geometrischen Gründen grundsätzlich nicht durch Fräsen oder andere spanabhebende Verfahren aus einem Rohling herausgearbeitet werden können, weil es rein geometrisch nicht möglich ist, mit dem spanabhebenden Werkzeug alle Stellen zu erreichen, die herausgearbeitet werden müssen. Solche Bauteile sind auch mit dem Verfahren der vorliegenden Erfindung nicht herstellbar.

Andererseits gibt es kompliziert gestaltete Bauteile, die zwar unter Berücksichtigung der Geometrie allein, im Prinzip mit einem spanabhebenden Verfahren herstellbar sein müssten, aber bisher zumindest nicht in ausreichender Qualität, zu wirtschaflich vemüftigen Bedingungen oder sogar grundsätzlich nicht mit den Mitteln des Stands der Technik mit den bisher bekannten spanabhebenden Verfahren herstellbar sind, obwohl die Geometrie des zu fertigenden Bauteils dies prinzipiell zulassen würde, es also nicht grundsätzlich verunmöglicht.

Das liegt letztlich sehr häufig daran, dass der Anstellwinkel, unter dem ein spanabhebendes Werkzeug z.B. beim Fräsen, Schruppen, Schlichten oder einem sonstigen spanabhebenden Verfahren optimal einzusetzen ist, eine inhärente Eigenschaft des jeweiligen spanabhebenden Werkzeugs ist.

Das heisst, jedem spanabhebenden Werkzeug ist ein Anstellwickel eigen, unter dem es im Betriebszustand beim Fräsen gegen eine zu bearbeitende Fläche angestellt werden sollte, um optimale Arbeitsergebnisse zu erhalten. Beispielweise kann ein solcher Anstellwinkel 90° betragen. Das heisst, wenn das entsprechende spanabhebende Werkzeug unter einem Winkel von 90° gegen eine zu bearbeitende Fläche beim Fräsen angestellt wird, kann mit dem Werkzeug ein optimales Arbeitsergebnis erzielt werden. Wird jedoch von diesem Winkel abgewichen, wird das Werkzeug schlechtere Ergebnisse liefern, wird die Abweichung vom optimalen Anstellwinkel wesentlich, führt das zu unakzeptablen Ergebnissen, oder ein Bearbeiten mit einem solchen Werkzeug ist gar nicht mehr möglich, im schlimmsten Fall kann das Werkzeug und / oder das zu bearbeitende Werkstück beschädigt oder gar zerstört werden.

Daher ist es bei den bekannten Fräsverfahren häufig nicht möglich, wesentlich von dem optimalen Anstellwinkel des Werkzeugs abzuweichen. Das heisst, es wird ein Werkstück mit einem mehr oder weniger konstanten Anstellwinkel vollständig bearbeitet. Das zur Folge, dass bestimmte Werkstücke, die zwar unter Berücksichtigung der Geometrie allein, durch ein spanabhebendes Verfahren bearbeitet werden könnten, weil im Prinzip das spanabhebende Werkzeug alle zu bearbeitenden Stellen rein geometrisch erreichen kann, mit den bekannten Verfahren nicht herstellbar sind, weil der Anstellwinkel des Werkstücks nicht angepasst werden kann und daher bestimmte Bereiche mit dem spanabhebenden Werkzeug eben doch nicht erreicht werden können.

Aber selbst wenn man in Betracht ziehen würde, den Anstellwinkel während des Fräsens zu ändern, sind in aller Regel solche Werkstücke dennoch bisher durch Zerspanverfahren allein nicht herstellbar, weil z.B. der Anstellwinkel so stark in Bezug auf den optimalen Anstellwinkel des Zerspanwerkzeugs verändert werden müsste, dass das Zerspanwerkzeug keine akzeptablen Arbeitsergebnisse mehr liefert. Das kann beispielsweise heissen, dass unter einem notwendigerweise sehr stark abweichenden Anstellwinkel das Zerspanwerkzeug überhaupt nicht mehr oder nur noch sehr unzureichend in der Lage ist, das Material überhaupt zu zerspanen, was vor allem bei sehr harten oder aus anderen Gründen schwer zu bearbeitenden Werkstücken der Fall sein kann, oder die Qualität der zerspanten Flächen und Bereiche auf Grund des für das Zerspanwerkzeug unbrauchbaren Anstellwinkels unakzeptabel schlecht ist.

Solche Probleme entstehen häufig, aber nicht nur, wenn zum Beispiel Hinterschnitte hergestellt werden müssen oder spezielle Werkzeuge eingesetzt werden müssen, z.B. konische Werkzeuge, mit denen dann bei den aus den Stand der Technik bekannten Fräsverfahren bestimmte Bereiche im Werkstück ohne Veränderung des Anstellwinkels nicht erreichbar sind, oder die erwähnten Hinterschnitte überhaupt nicht realisierbar sind.

Die Aufgabe der Erfindung ist es daher, ein Zerspanverfahren bereitzustellen, mit dem auch komplizierte Geometrien hergestellt werden können, insbesondere auch in sehr schwer zu bearbeitenden Materialien, die z.B. eine hohe Festigkeit oder eine hohe Härte besitzen, die mit den bisher aus dem Stand der Technik bekannten Verfahren nicht herstellbar sind.

Die diese Aufgaben in verfahrenstechnischer und apparativer Hinsicht lösenden Gegenstände der Erfindung sind durch die Merkmale des unabhängigen Anspruchs der jeweiligen Kategorie gekennzeichnet.

Die abhängigen Ansprüche beziehen sich auf besonders vorteilhafte Ausführungsformen der Erfindung.

Die Erfindung betrifft somit ein Zerspanverfahren zur Bearbeitung eines Werkstücks mittels einer Zerspanvorrichtung, umfassend eine Steuer- und / oder Regeleinheit und eine programmgesteuerte Datenverarbeitungsanlage, sowie einen Manipulator mit einem Zerspanwerkzeug zur Herstellung einer dreidimensionalen Struktur durch Zerspanen des Werkstücks im Bereich einer gekrümmten Führungsfläche. Das Zerspanverfahren umfasst dabei die Schritte der Speicherung der Geometrie und / oder der räumlichen Lage der herzustellenden dreidimensionalen Struktur im Werkstück in einer Speichereinrichtung der Datenverarbeitungsanlage; Festlegung einer Raumkoordinate und / oder eines Flächenvektors der Führungsfläche unter Berücksichtigung der Geometrie und / oder der räumlichen Lage der herzustellenden dreidimensionalen Struktur im Werkstück, wobei die Führungsfläche derart an die Geometrie und die räumliche Lage der dreidimensionalen Struktur im Werkstück angepasst wird, dass das Zerspanwerkzeug beim Zerspanen des Werkstücks nicht mit einer die dreidimensionale Struktur begrenzenden Randfläche in Berührung gebracht wird und die Führungsfläche zu keiner Randfläche und / oder zu keiner Endfläche als Parallelfläche und / oder als Offsetfläche angeordnet wird; Führung des Zerspanwerkzeugs entlang der Führungsfläche unter Zerspanung eines durch die Führungsfläche vorgegebenen Bearbeitungsbereichs des Werkstücks zur Bildung der dreidimensionalen Struktur im Werkstück, wobei das Zerspanwerkzeug in Bezug auf eine Führungsachse unter einem konstanten Führungswinkel entlang der Führungsfläche geführt wird.

Wesentlich für die Erfindung ist, dass das Zerspanwerkzeug in Bezug auf seine Führungsachse unter einem konstanten Führungswinkel entlang einer bestimmten Führungsfläche geführt wird.

Das wird dadurch erreicht, dass zunächst die Geometrie und die räumliche Lage der herzustellenden dreidimensionalen Struktur erfasst wird und in einem Speicher einer elektronischen Ansteuereinrichtung, z.B. einer mehrachsigen, insbesondere einer fünfachsigen Fräsmaschine oder CNC-Maschine abgelegt wird und sodann unter Berücksichtigung dieser Daten alle Führungsflächen berechnet werden, entlang derer das Zerspanwerkzeug zur Herstellung des Werkstücks nacheinander zerspanend geführt wird. Dabei werden die Führungsflächen so berechnet, dass einerseits das Zerspanwerkzeug zumindest in Bezug auf eine bestimmte Führungsfläche, bevorzugt in Bezug auf alle berechneten Führungsflächen beim Zerspanen unter ein und demselben Winkel geführt wird, nämlich im wesentlichen unter dem für das Zerspanwerkzeug optimalen Führungswinkel geführt wird. Es versteht sich, dass das Zerspanwerkzeug auch unter einem leicht, von dem vom Hersteller des Zerspanwerkzeugs angegebenen optimalen Führungswinkel abweichend geführt werden kann, so dass durch die geringe Abweichung vom optimalen Führungswinkel die Qualität des durch zerspanen hergestellten Werkstücks nicht leidet und auch das Zerspanwerkzeug im wesentlichen noch optimal arbeiten kann. Wenn z.B. für ein Zerspanwerkzeug ein optimaler Führungswinkel, oben auch Anstellwinkel genannt, von z.B. 90° angegeben wird, kann je nach zu bearbeitendem Material oder je nach verwendetem Zerspanwerkzeug eine gewisse Abweichung, z.B. um +/- 5° oder +/- 1° oder weniger, oder eine andere unbedeutende Winkelabweichung im Führungswinkel ohne weiteres tolerierbar sein.

Dabei werden die Führungsflächen durch das erfindungsgemässe Verfahren nicht nur so festgelegt, dass der Führungswinkel zur Führung des Zerspanwerkzeugs im wesentlichen konstant ist, sondern alle Führungsflächen werden darüber hinaus so im voraus berechnet, dass das Zerspanwerkzeug beim Zerspanen des Werkstücks nicht mit einer die dreidimensionale Struktur begrenzenden Randfläche in Berührung gebracht wird und die Führungsfläche zu keiner Randfläche und / oder zu keiner Endfläche als Parallelfläche und / oder als Offsetfläche angeordnet wird.

Unter Offsetfläche sind im Rahmen dieser Anmeldung solche Flächen zu verstehen, die im strengen Sinne zwar nicht parallel sind, wie z.B. zwei nicht gekrümmte Ebenen, jedoch überall den gleichen Abstand zueinander haben. Ein Beispiel dafür sind z.B. zwei konzentrische Kugelschalen mit verschiedenem Durchmesser, die über die gesamte Oberfläche in einem festen Abstand zueinander stehen, aber dennoch unterschiedliche Krümmungsradien haben, und damit im strengen Sinne eigentlich nicht parallel sind, sondern zueinander Offsetflächen bilden.

In einem speziellen Ausführungsbeispiel eines erfindungsgemässen Verfahrens wir die Raumkoordinate und / oder der Flächenvektor von mindestens zwei verschiedenen Führungsflächen in einem separaten Teilschritt, insbesondere in einem separaten Computer-Teilprogramm generiert. Das heisst, es kann in bestimmten Fällen vorteilhaft sein, z.B. ein Computerprogramm, mit dem ein erfindungsgemässes Verfahren elektronisch abgebildet werden kann, in mehrere Teilprozesse oder Unterprogramme zu zerlegen, die zum Beispiel bestimmte Klassen von Führungsflächen, oder eine Gruppe von Führungsflächen, die bestimmten Bereichen des zu bearbeitenden Werkstücks zugeordnet sind, oder in einer anderen Art und Weise, angepasst an eine bestimmte Problemstellung geeignet gruppiert sind, zusammenzufassen und in den jeweiligen Teilschritten unter Beachtung bestimmter Besonderheiten zunächst separat zu berechnen und dann die Ergebnisse zu einer Gesamtmenge aller benötigten Führungsflächen zusammenzufügen.

Es versteht sich, dass völlig analog neben den Koordinaten der Führungsfläche auch eine Werkzeugkoordinate und / oder ein Werkzeugvektor des Zerspanwerkzeugs an die Führungsfläche angepasst werden kann, d.h. die Erfindung betrifft selbstverständlich auch Verfahren, bei welchen die Werkzeugkoordinaten und Werkzeugvektoren direkt berechnet werden, wobei diese Werkzeugkoordinaten und Werkzeugvektoren zu Arbeitsflächen führen, die mit den Führungsflächen im Sinne der Anmeldung identisch sind.

In einem für die Praxis besonders wichtigen Beispiel sind mindestens zwei Führungsflächen nicht parallel zueinander. Das heisst, verschiedene Führungsflächen können z.B. verschiedene konstante oder nicht-konstante Krümmungsradien haben und / oder können z.B. gleiche Krümmungsradien oder einen gleichen Krümmungsradiusverlauf haben und dennoch nicht parallel sein und / oder zueinander keine Offsetflächen bilden.

Bevorzugt wird der Führungswinkel des Zerspanwerkzeugs in Bezug auf die Führungsflächen während des gesamten Zerspanvorgangs bei der Herstellung der dreidimensionalen Struktur nicht verändert.

Dabei kann es in speziellen Fällen selbstverständlich möglich sein, dass der Führungswinkel während der Herstellung der dreidimensionalen Struktur bei einem Wechsel von einer Führungsfläche zu einer nächsten Führungsfläche nach einem vorgegebenen Schema variiert wird, wobei bevorzugt der Führungswinkel bei allen Führungsflächen nur wenig, z.B. nur 0.5° oder höchstens 1° vom optimalen Führungswinkel abweicht.

Je nach Anforderung, zu bearbeitendem Material, der speziellen zu bearbeitenden Geometrie oder in Abhängigkeit von anderen Parametern kann der Wechsel des Zerspanwerkzeugs von einer Führungsfläche auf eine nächste Führungsfläche diskontinierlich durchgeführt werden und / oder zum Wechseln von einer Führungsfläche auf eine nächste Führungsfläche kann dazu eine Bohrung im Bereich der Führungsfläche, insbesondere im Bereich aller Führungsflächen vorgesehen werden. Dabei ist auch ein rampenförmiger oder rampenähnlicher Übergang von einer Führungsfläche auf die nächste Führungsfläche möglich.

Das heisst, wenn das Werkstück im Bereich einer vorgegebenen Führungsfläche fertig bearbeitet worden ist, kann der Übergang auf eine nächste Führungsfläche z.B. dadurch bewerkstelligt werden, dass an einer vorbestimmten Stelle z.B. eine Bohrung in das Werkzeug in einer bestimmten vorgegebenen Tiefe in das Material eingebracht, eingebohrt oder eingefräst wird, um entlang einer nächsten Führungsfläche das Material in einer der eingebohrten Tiefe entsprechenden Stärke bzw. Dicke zu zerspanen.

Es ist aber auch in speziellen Fällen möglich, dass vor dem eigentlichen Zerspanungsvorgang eine Bohrung durch mehrere oder alle Führungsflächen eingebracht wird, das heisst, es wird eine Bohrung eingebracht, die durch einen Teil oder die gesamte zu zerspanende Dicke des Materials geht, so dass, jedesmal, wenn entlang einer der vorberechneten Führungsflächen eine komplette Ebene in vorgegebener Stärke abgetragen wurde, der Übergang zur nächsten Führungsfläche dadurch bewerkstelligt wird, dass das Zerspanwerkzeug in der Bohrung in einer Tiefe platziert wird, die im wesentlichen der Dicke einer neu abzutragenden Materialschicht entspricht, so dass ausgehend von der Bohrung das Material in einer bestimmten Stärke entlang einer nächsten Führungsfläche abgetragen werden kann.

Der Wechsel des Zerspanwerkzeugs von einer Führungsfläche auf eine nächste Führungsfläche kann jedoch auch kontinuierlich vorgenommen werden, und insbesondere spiralartig in Form einer Helix, deren äusere einhüllende Form z.B. der Form einer zu zerspanenden Struktur, wie zum Beispiel eines auszufräsenden Kanals entspricht, durchgeführt werden. D.h. zum Beispiel, dass das Zerspanwerkzeug mehr oder weniger kontinuierlich in eine Vortriebsrichtung des Zerspanwerkzeugs, also im wesentlichen senkrecht zu einer Führungsfläche vorgetrieben wird, so dass der Übergang von einer Führungsfläche nicht diskontinuierlich sondern allmählich erfolgt, so dass das Zerspanwerkzeug in Vortriebsrichtung z.B. eine spiral- oder helixartige Bewegung vollführt.

Der Führungswinkel, der optimal auf das Zerspanwerkzeug eingestellt wird, kann je nach Zerspanwerkzeug z.B. auf einen Wert zwischen 70° und 120°, im speziellen auf einen Wert zwischen 85° und 95°, insbesondere auf einen Wert zwischen 88° und 92°, bevorzugt auf einen Wert von ca. 90° eingestellt werden.

Dabei ist es insbesondere auch möglich, mit dem erfindungsgemässen Verfahren einen Hinterschnitt in die dreidimensionale Struktur einzuarbeiten, indem die Führungsflächen, auf oder entlang derer das Zerspanwerkzeug unter einem konstanten Führungswinkel geführt wird, geeignet gewählt, das heisst berechnet werden, wobei im Speziellen sogar ein konisches Zerspanwerkzeug verwendet werden kann, mit welchem sogar Hinterschnitte realisiert werden können, unter Beibehaltung eines konstanten Führungswinkels auf der Führungsfläche.

Insbesondere, aber natürlich nicht nur, kann mit dem erfindungsgemässen Verfahren vorteilhaft ein Impeller oder eine Leitschaufel, insbesondere ein Impeller oder eine Leitschaufel einer Pumpe, eines Verdichters oder einer Turbine hergestellt werden und / oder ein Bauteil und / oder ein Maschinengehäuse eines Maschinenteils, insbesondere eines Motors und / oder ein hydraulisches und / oder ein pneumatisches Bauteil und / oder ein anderes Bauteil hergestellt werden und / oder die dreidimensionale Struktur kann ein offener Kanal und / oder ein geschlossener Kanal, insbesondere ein offener und / oder geschlossener Kanal eines Impellers und / oder eine andere dreidimensionale Struktur eines Werkstücks sein.

Die Erfindung betrifft weiter ein Computerprogrammprodukt zur Erzeugung einer Führungsfläche zur Durchführung eines der oben näher beschriebenen Verfahren.

Die Erfindung betrifft ausserdem ein Computerprogrammprodukt für eine Datenverarbeitungsanlage mit welcher eine Ansteuereinrichtung zur Steuerung und / oder Regelung einer Zerspanvorrichtung, insbesondere einer Mehrachsen-Werkzeugmaschine, im Speziellen einer Mehrachsen-CNC-Maschine gemäss einem Zerspanverfahren, wie oben ausführlich beschrieben, programmgesteuert betreibbar ist.

Überdies betrifft die Erfindung eine Zerspanvorrichtung, insbesondere eine Mehrachsen-Werkzeugmaschine, im Speziellen eine Mehrachsen-CNC-Maschine, umfassend eine Steuer- und / oder eine Regeleinheit und eine programmgesteuerte Datenverarbeitungsanlage, sowie einen Manipulator mit einem Zerspanwerkzeug zur Herstellung einer dreidimensionalen Struktur durch Zerspanen eines Werkstücks, wobei auf der programmgesteuerten Datenverarbeitungslage ein Computergrogrammprodukt gemäss der vorliegenden Erfindung implementiert ist, so dass im Betriebszustand mit der Zerspanvorrichtung ein erfindungsgemässes Zerspanverfahren zur Herstellung eines erfindungsgemässen Werkstücks durchführbar ist.

Im folgenden wird die Erfindung an Hand der Zeichnung näher erläutert. Es zeigen in schematischer Darstellung:

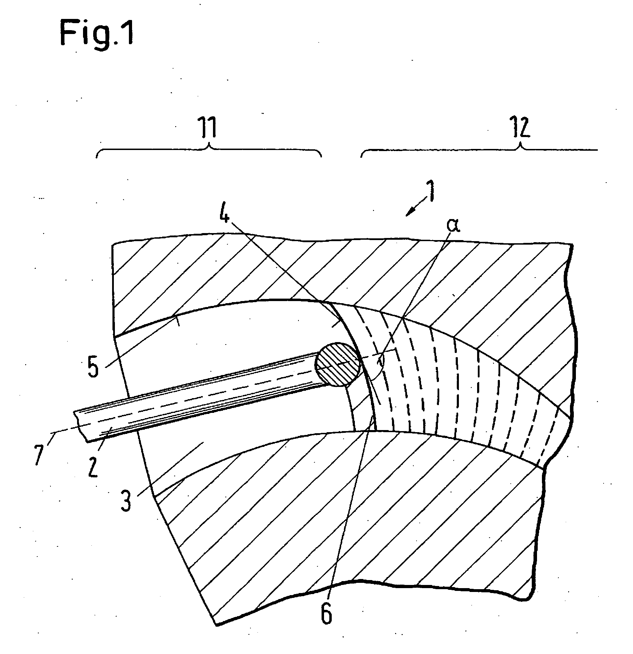

- Fig. 1: Impeller mit Zerspanwerkzeug und Führungsflächen im Schnitt.

In Fig. 1 ist in schematischer Darstellung ein Werkstück 1, im vorliegenden Fall ein Impeller 1, z.B. ein Impeller eines Radialverdichters, im Schnitt gezeigt. Die Fig. 1 zeigt ein Zerspanwerkzeug 2, das von einem in Fig. 1 nicht gezeigten Manipulator einer ebenfalls nicht dargestellten Zerspanvorrichtung zur Erzeugung einer dreidimensionalen Struktur 3, hier eines geschlossenen Kanals 3 zerspanend entlang einer Führungsfläche 4 zur Zerspanung des Bearbeitungsbereichs 6 geführt wird.

In einem vorderen Bereich 11 ist bereits ein Teil des insgesamt heraus zu spanenden Kanals 3 fertig gestellt, während in einem daran angrenzenden Bereich 12 der Kanal 3 noch nicht fertig gestellt ist. Vor Beginn des Zerspanvorgangs zur Herstellung des Kanals 3 nach dem erfindungsgemässen Verfahren, wurden alle Führungsflächen 4 berechnet, die schematisch im Bereich 12 als gekrümmte gestrichelte Linien dargestellt sind. Erfindungsgemäss wird das Zerspanwerkzeug 2 in Bezug auf die Führungsachse 7 unter einem konstanten Winkel α geführt. Die Führungsflächen 4 sind dabei so festgelegt, dass das Werkzeug den gesamten Kanal 3 herausfräsen kann, ohne dass das Führungswerkzeug mit einer der Randflächen 5 des Kanals 3, die den Kanal 3 begrenzen, in Berührung kommt. Der Kanal 3 der Fig. 1 hat dabei zum Beispiel eine Länge von ca. 70mm bis 160mm, im speziellen z.B. 125mm, z.B. eine Breite und / oder Höhe und / oder einen Durchmesser von z.B. bis 100mm, im speziellen bis zu 50mm, insbesondere zum Beispiel auch ca. 14.5mm. Es versteht sich, dass die Dimensionen der dreidimensionalen Struktur 3, die im Beispiel der Fig. 1 ein Kanal 3 ist, auch erheblich von den zuvor genannten speziellen Dimensionen des Kanals der Fig. 1 abweichen können.

Das Material, aus dem das Werkstück nach einem erfindungsgemässen Zerspanverfahren herausgearbeitet wird, ist bevorzugt ein Metall oder eine Metalllegierung und ist im Speziellen z.B. Aluminium, Titan, Stahl, Nickel, eine Nickel- oder Cobalt-Basislegierung, Magnesium, Schmiede- oder Gussmaterial, ein Bundmetall oder ist ein anderes Material, zum Beispiel ein Kunststoff oder ein Verbundmaterial oder ein anderes zerspanbares Material.

Durch das erfindungsgemässe Verfahren ist es somit erstmals möglich, ein Werkstück mit einem mehr oder weniger konstanten Anstellwinkel vollständig zu bearbeiten, selbst wenn es eine sehr komplizierte geometrische Struktur hat und das Material schwer zu zerspanen ist, weil es z.B. eine grosse Härte und / oder eine hohe Festigkeit und / oder andere Eigenschaften hat, die das Zerspanen erschweren, oder ein Zerspanen durch die aus dem Stand der Technik bekannten Verfahren bei bestimmten Geometrien unmöglich macht.

Somit können alle Werkstücke, die unter Berücksichtigung der Geometrie allein, durch ein spanabhebendes Verfahren im Prinzip bearbeitet werden können, weil das spanabhebende Werkzeug alle zu bearbeitenden Stellen rein geometrisch erreichen kann, mit dem erfindungsgemässen Verfahren auch tatsächlich erstmals hergestellt werden, und zwar auch dann, wenn es sich um sehr schwer zu zerspanende Materialien handelt, die nur zerspant werden können, wenn das Zerspanwerkzeug im wesentlichen unter seinem optimalen Führungswinkel bzw. Anstellwinkel beim Zerspanen eingesetzt wird.

Das liegt daran, dass zumindest in Bezug auf eine Führungsfläche der Anstellwinkel des Zerspanwerkzeugs nicht angepasst werden muss, um bestimmte Bereiche mit dem spanabhebenden Werkzeug zu erreichen.

Somit können erstmals auch sehr komplizierte Geometrien auch aus sehr harten oder aus anderen Gründen schwer zu bearbeitenden Werkstücken zerspanend herausgearbeitet werden, und zwar ohne, dass ein Qualitätsverlust der zerspanten Flächen und Bereiche auf Grund eines für das Zerspanwerkzeug unbrauchbaren Anstellwinkels in Kauf genommen werden muss.

So ist es zum Beispiel auch erstmals möglich Hinterschnitte herzustellen und / oder spezielle Werkzeuge einzusetzen, z.B. konische Werkzeuge, mit denen bei den aus den Stand der Technik bekannten Fräsverfahren bestimmte Bereiche im Werkstück ohne Veränderung des Anstellwinkels nicht erreichbar sind.

## Patentansprüche

1. Zerspanverfahren zur Bearbeitung eines Werkstücks (1) mittels einer Zerspanvorrichtung, umfassend eine Steuer und / oder Regeleinheit und eine programmgesteuerte Datenverarbeitungsanlage, sowie einen Manipulator mit einem Zerspanwerkzeug (2) zur Herstellung einer dreidimensionalen Struktur (3) durch Zerspanen des Werkstücks (1) im Bereich einer gekrümmten Führungsfläche (4), welches Zerspanverfahren die folgenden Schritte umfasst:
- Speicherung der Geometrie und / oder der räumlichen Lage der herzustellenden dreidimensionalen Struktur (3) im Werkstück (1) in einer Speichereinrichtung der Datenverarbeitungsanlage;
- Festlegung einer Raumkoordinate und / oder eines Flächenvektors der Führungsfläche (4) unter Berücksichtigung der Geometrie und / oder der räumlichen Lage der herzustellenden dreidimensionalen Struktur (3) im Werkstück (1), wobei die Führungsfläche (4) derart an die Geometrie und die räumliche Lage der dreidimensionalen Struktur (3) im Werkstück (1) angepasst wird, dass das Zerspanwerkzeug (2) beim Zerspanen des Werkstücks (1) nicht mit einer die dreidimensionale Struktur begrenzenden Randfläche (5) in Berührung gebracht wird und die Führungsfläche (4) zu keiner Randfläche (5) und / oder zu keiner Endfläche als Parallelfläche und / oder als Offsetfläche angeordnet wird;
- Führung des Zerspanwerkzeugs (2) entlang der Führungsfläche (4) unter Zerspanung eines durch die Führungsfläche (4) vorgegebenen Bearbeitungsbereichs (6) des Werkstücks (1) zur Bildung der dreidimensionalen Struktur (3) im Werkstück (1);
**dadurch gekennzeichnet, dass** das Zerspanwerkzeug (2) in Bezug auf eine Führungsachse (7) unter einem konstanten Führungswinkel (α) entlang der Führungsfläche (4) geführt wird.

2. Zerspanverfahren nach Anspruch 1, wobei die Raumkoordinate und / oder der Flächenvektors von mindestens zwei verschiedenen Führungsflächen (4) in einem separaten Teilschritt, insbesondere in einem separaten Computer-Teilprogramm generiert werden.

3. Zerspanverfahren nach einem der Ansprüche 1 oder 2, wobei eine Werkzeugkoordinate und / oder ein Werkzeugvektor des Zerspanwerkzeugs (2) an die Führungsfläche (4) angepasst wird.

4. Zerspanverfahren nach einem der vorangehenden Ansprüche, wobei mindestens zwei Führungsflächen (4) nicht parallel sind.

5. Zerspanverfahren nach einem der vorangehenden Ansprüche, wobei der Führungswinkel (α) während der Herstellung der dreidimensionalen Struktur (3) nicht verändert wird.

6. Zerspanverfahren nach einem der vorangehenden Ansprüche, wobei der Führungswinkel (α) während der Herstellung der dreidimensionalen Struktur (3) bei einem Wechsel von einer Führungsfläche (4) zu einer nächsten Führungsfläche (4)nach einem vorgegebenen Schema variiert wird.

7. Zerspanverfahren nach einem der vorangehenden Ansprüche, wobei der Wechsel des Zerspanwerkzeugs (2) von einer Führungsfläche (4) auf eine nächste Führungsfläche (4) diskontinierlich durchgeführt wird und / oder zum Wechseln von einer Führungsfläche (4) auf eine nächste Führungsfläche (4) eine Bohrung im Bereich der Führungsfläche (4), insbesondere im Bereich aller Führungsfläche (4) vorgesehen wird und / oder ein rampenförmiger und / oder ein rampenähnlicher Übergang von einer Führungsfläche auf die nächste Führungsfläche durchgeführt wird.

8. Zerspanverfahren nach einem der vorangehenden Ansprüche, wobei der Wechsel des Zerspanwerkzeugs (2) von einer Führungsfläche (4) auf eine nächste Führungsfläche (4) kontinuierlich, insbesondere spiralartig in Form einer Helix durchgeführt wird.

9. Zerspanverfahren nach einem der vorangehenden Ansprüche, wobei in die dreidimensionale Struktur (3) ein Hinterschnitt eingearbeitet wird.

10. Zerspanverfahren nach einem der vorangehenden Ansprüche, wobei das Zerspanwerkzeug (2) ein konisches Zerspanwerkzeug (2) ist.

11. Zerspanverfahren nach einem der vorangehenden Ansprüche, wobei das Werkstück (1) ein Impeller (1) oder eine Leitschaufel, (1) insbesondere ein Impeller (1) oder eine Leitschaufel (1) einer Pumpe, eines Verdichters oder einer Turbine ist und / oder ein Bauteil (1) ist und / oder ein Maschinengehäuse (1) eines Maschinenteils, insbesondere eines Motors ist und / oder ein hydraulisches und / oder ein pneumatisches Bauteil (1) ist und / oder ein anderes Bauteil (1) ist und / oder die dreidimensionale Struktur (3) ein offener Kanal (3) und / oder ein geschlossener Kanal (3), insbesondere ein offener und / oder geschlossener Kanal (3) eines Impellers (1) ist und / oder eine andere dreidimensionale Struktur (3) eines Werkstücks (1) ist.

12. Computerprogrammprodukt zur Erzeugung einer Führungsfläche zur Durchführung eines Verfahrens gemäss einem der Ansprüche 1 bis 11.

13. Computerprogrammprodukt für eine Datenverarbeitungsanlage mit welcher eine Ansteuereinrichchtung zur Steuerung und / oder Regelung einer Zerspanvorrichtung, insbesondere einer Mehrachsen-Werkzeugmaschine, im Speziellen einer Mehrachsen-CNC-Maschine gemäss einem Zerspanverfahren nach einem der Ansprüche 1 bis 11 programmgesteuert betreibbar ist.

14. Zerspanvorrichtung, insbesondere eine Mehrachsen-Werkzeugmaschine, im Speziellen eine Mehrachsen-CNC-Maschine, umfassend eine Steuer- und / oder eine Regeleinheit und eine programmgesteuerte Datenverarbeitungsanlage, sowie einen Manipulator mit einem Zerspanwerkzeug (2) zur Herstellung einer dreidimensionalen Struktur (3) durch Zerspanen eines Werkstücks (1) **dadurch gekennzeichnet, dass** auf der programmgesteuerten Datenverarbeitungstage ein Computergrogrammprodukt nach Anspruch 12 oder 13 implementiert ist, so dass im Betriebszustand mit der Zerspanvorrichtung ein Zerspanverfahren nach einem der Ansprüche 1 - 11 zur Herstellung eines Werkstücks (1) nach Anspruch 16 durchführbar ist.

## Claims

1. A method for the machining of a workpiece (1) by stock removal by means of a machining apparatus, including a control unit and/or regulating unit and a program-controlled data processing unit as well as a manipulator with a machining tool (2) for the manufacture of a three-dimensional structure (3) by machining the workpiece (1) in the region of a curved guide surface (4), said machining method including the following steps:
- storing in a memory device of the data processing unit the geometry and/or the spatial position of the three-dimensional structure (3) to be manufactured in the workpiece (1);
- fixing a spatial coordinate and/or a surface vector of the guide surface (4) while taking account of the geometry and/or the spatial position of the three-dimensional structure (3) to be manufactured in the workpiece (1), with the guide surface (4) being matched to the geometry and to the spatial position of the three-dimensional structure (3) in the workpiece (1) such that the machining tool (2) is not brought into contact with a marginal surface (5) bounding the three-dimensional structure on the machining of the workpiece (1) and the guide surface (4) is not arranged as a parallel surface and/or as a offset surface with respect to any marginal surface (5) and/or any end surface;
- guiding the machining tool (2) along the guide surface (4) while machining a machining region (6) of the workpiece (1) pre-set by the guide surface (4) for the formation of the three-dimensional structure (3) in the workpiece (1),
**characterised in that** the machining tool (2) is guided along the guide surface (4) at a constant guide angle (α) with respect to a guide axis (7).

2. A machining method in accordance with claim 1, wherein the spatial coordinate and/or the surface vector of at least two different guide surfaces (4) are generated in a separate part step, in particular in a separate computer sub-program.

3. A machining method in accordance with one of the claims 1 or 2, wherein a tool coordinate and/or a tool vector of the machining tool (2) is matched to the guide surface (4).

4. A machining method in accordance with any one of the preceding claims, wherein at least two guide surfaces (4) are not parallel.

5. A machining method in accordance with any one of the preceding claims, wherein the guide angle (α) is not varied during the manufacture of the three-dimensional structure (3).

6. A machining method in accordance with any one of the preceding claims, wherein the guide angle (α) is varied in accordance with a pre-set scheme during the manufacture of the three-dimensional structure (3) on a change from one guide surface (4) to a next guide surface (4).

7. A machining method in accordance with any one of the preceding claims, wherein the change of the machining tool (2) from one guide surface (4) to a next guide surface (4) is carried out discontinuously and/or a bore is provided in the region of the guide surface (4), in particular in the region of all guide surfaces (4) and/or a ramp-shaped and/or a ramp-like transition is carried out from one guide surface to the next guide surface for the changing from one guide surface (4) to a next guide surface (4).

8. A machining method in accordance with any one of the preceding claims, wherein the change of the machining tool (2) from one guide surface (4) to a next guide surface (4) is carried out continuously, in particular in the manner of a spiral in the form of a helix.

9. A machining method in accordance with any one of the preceding claims, wherein an undercut is worked into the three-dimensional structure (3).

10. A machining method in accordance with any one of the preceding claims, wherein the machining tool (2) is a conical machining tool (2).

11. A machining method in accordance with any one of the preceding claims, wherein the workpiece (1) is an impeller (1) or a guide vane (1), in particular an impeller (1) or a guide vane (1) of a pump, of a compressor or of a turbine, and/or a component (1) and/or is a machine housing (1) of a machine part, in particular of a motor, and/or is a hydraulic and/or a pneumatic component (1) and/or is another component (1) and/or the three-dimensional structure (3) is an open channel (3) and/or a closed channel (3), in particular an open and/or closed channel (3) of an impeller (1), and/or is another three-dimensional structure (3) of a workpiece (1).

12. A computer program product for the generation of a guide surface for the carrying out of a method in accordance with any one of the claims 1 to 11.

13. A computer program product for a data processing unit with which a control device for the control and/or regulation of a machining apparatus, in particular of a multiaxial tool machine, specifically a multiaxial CNC machine, can be operated in accordance with a machining method in accordance with any one of the claims 1 to 11 in a program-controlled manner.

14. A machining apparatus, in particular a multiaxial machine tool, specifically a multiaxial CNC machine, including a control unit and/or a regulation unit and a program-controlled data processing unit as well as a manipulator having a machining tool (2) for the manufacture of a three-dimensional structure (3) by machining a workpiece (1), **characterised in that** a computer program product in accordance with claim 12 or 13 is implemented on the program-controlled data processing unit so that a machining method in accordance with any one of the claims 1-11 can be carried out with the machining apparatus for the manufacture of a workpiece (1) in accordance with claim 16 in the operating state.

## Revendications

1. Procédé d'enlèvement de copeaux pour l'usinage d'une pièce (1) au moyen d'un dispositif d'enlèvement de copeaux, comportant une unité de commande et/ou de régulation et une installation de traitement de données commandée par programme, ainsi qu'un manipulateur avec un outil d'enlèvement de copeaux (2) pour la réalisation d'une structure tridimensionnelle (3) par enlèvement de copeaux de la pièce (1) dans la zone d'une face de guidage courbée (4), ledit procédé d'enlèvement de copeaux comprend les étapes suivantes:
- stockage de la géométrie et/ou de la position spatiale de la structure tridimensionnelle (3) à réaliser dans la pièce (1) d'une installation de stockage de l'installation de traitement de données;
- détermination d'une coordonnée spatiale et/ou d'un vecteur de face de la face de guidage (4) en tenant compte de la géométrie et/ou de la position spatiale de la structure tridimensionnelle (3) à réaliser dans la pièce (1), où la face de guidage (4) est adaptée de telle sorte à la géométrie et à la position spatiale de la structure tridimensionnelle (3) dans la pièce (1) que l'outil d'enlèvement de copeaux (2), lors de l'enlèvement de copeaux de la pièce (1), ne vient pas en contact avec la face de bord (5) délimitant la structure tridimensionnelle, et la face de guidage (4) est disposée à aucune face de bord (5) et/ou à aucune face d'extrémité comme face parallèle et/ou comme face offset;
- guidage de l'outil d'enlèvement de copeaux (2) le long de la face de guidage (4) en enlevant les copeaux d'une zone de travail (6) de la pièce (1) prédéfinie par la face de guidage (4) pour former la structure tridimensionnelle (3) dans la pièce (1);
**caractérisé en ce que** l'outil d'enlèvement de copeaux (2) est guidé par rapport à un axe de guidage (7) sous un angle de guidage constant (α) le long de la face de guidage (4).

2. Procédé d'enlèvement de copeaux selon la revendication 1, dans lequel la coordonnée spatiale et/ou le vecteur de face d'au moins deux faces de guidage différentes (4) sont produits dans une étape partielle séparée, en particulier dans un programme partiel informatique séparé.

3. Procédé d'enlèvement de copeaux selon l'une des revendications 1 ou 2, dans lequel une coordonnée d'outil et/ou un vecteur d'outil de l'outil d'enlèvement de copeaux (2) est adapté à la face de guidage (4).

4. Procédé d'enlèvement de copeaux selon l'une des revendications précédentes, dans lequel au moins deux faces de guidage (4) ne sont pas parallèles.

5. Procédé d'enlèvement de copeaux selon l'une des revendications précédentes, dans lequel l'angle de guidage (α) pendant la réalisation de la structure tridimensionnelle (3) n'est pas modifié.

6. Procédé d'enlèvement de copeaux selon l'une des revendications précédentes, dans lequel l'angle de guidage (α) pendant la réalisation de la structure tridimensionnelle (3) est varié lors d'un changement d'une face de guidage (4) à une face de guidage suivante (4) selon un schéma prédéterminé.

7. Procédé d'enlèvement de copeaux selon l'une des revendications précédentes, dans lequel le changement de l'outil d'enlèvement de copeaux (2) d'une face de guidage (4) à une face de guidage suivante (4) est effectué d'une manière discontinue et/ou pour changer d'une face de guidage (4) à une face de guidage suivante (4), un perçage est prévu dans la zone de la face de guidage (4), en particulier dans la zone de toutes les faces de guidage (4) et/ou un passage en forme de rampe et/ou similaire à une rampe est exécuté d'une face de guidage à la face de guidage suivante.

8. Procédé d'enlèvement de copeaux selon l'une des revendications précédentes, dans lequel le changement de l'outil d'enlèvement de copeaux (2) d'une face de guidage (4) à une face de guidage suivante (4) est exécuté d'une manière continue, en particulier en forme de spirale sous la forme d'une hélice.

9. Procédé d'enlèvement de copeaux selon l'une des revendications précédentes, dans lequel est ménagé dans la structure tridimensionnelle (3) une contre-dépouille.

10. Procédé d'enlèvement de copeaux selon l'une des revendications précédentes, dans lequel l'outil d'enlèvement de copeaux (2) est un outil d'enlèvement de copeaux conique (2).

11. Procédé d'enlèvement de copeaux selon l'une des revendications précédentes, dans lequel la pièce (1) est une roue (1) ou une aube directrice (1), en particulier une roue (1) ou une aube directrice (1) d'une pompe, d'un compresseur ou d'une turbine et/ou un composant (1) et/ou un carter de machine (1) d'une partie de machine, en particulier d'un moteur, et/ou un composant hydraulique et/ou pneumatique (1) et/ou un autre composant (1) et/ou la structure tridimensionnelle (3) est un canal ouvert (3) et/ou un canal fermé (3), en particulier un canal ouvert et/ou fermé (3) d'une roue (1) et/ou une autre structure tridimensionnelle (3) d'une pièce (1).

12. Produit de programme informatique pour la production d'une face de guidage pour l'exécution d'un procédé selon l'une quelconque des revendications 1 à 11.

13. Produit de programme informatique pour une installation de traitement de données, au moyen de laquelle une installation de commande pour la commande et/ou la régulation d'un dispositif d'enlèvement de copeaux, en particulier d'une machine d'outils à axes multiples, spécialement d'une machine CNC à axes multiples peut être amenée à fonctionner en étant commandée par programme selon un procédé d'enlèvement de copeaux selon l'une des revendications 1 à 11.

14. Dispositif d'enlèvement de copeaux, en particulier une machine-outil à axes multiples, spécialement une machine CNC à axes multiples, comprenant une unité de commande et/ou de régulation et une installation de traitement de données commandée par programme, ainsi qu'un manipulateur avec un outil d'enlèvement de copeaux (2) pour la réalisation d'une structure tridimensionnelle (3) par enlèvement de copeaux d'une pièce (1), **caractérisé en ce qu'**il est mis en oeuvre sur l'installation de traitement de données commandée par programme un produit de programme informatique selon la revendication 12 ou 13, de sorte qu'à l'état de fonctionnement, au moyen du dispositif d'enlèvement de copeaux, un procédé d'enlèvement de copeaux selon l'une des revendications 1 à 11 pour la fabrication d'une pièce (1) selon la revendication 16 peut être exécuté.
